# EUROPÄISCHE PATENTSCHRIFT

(11) **EP 3 027 783 B1**
(45) Veröffentlichungstag und Bekanntmachung des Hinweises auf die Patenterteilung: **15.08.2018**
(21) Anmeldenummer: 14738829.2
(22) Anmeldetag: 11.07.2014
(51) Int. Cl.: C21D 1/26, F28F 19/00, F28F 21/08, F28D 20/00, C22C 38/00, C21D 6/00, C21D 8/10, C22C 38/02, C22C 38/04, C22C 38/42, C22C 38/44, C22C 38/50, C22C 38/54, C21D 9/08

(54) **ROHRFÖRMIGER KÖRPER AUS AUSTENITISCHEM STAHL SOWIE SOLARRECEIVER**
TUBULAR ELEMENT CONSISTING OF AUSTENITIC STEEL, AND SOLAR RECEIVER
CORPS TUBULAIRE EN ACIER AUSTÉNITIQUE ET RÉCEPTEUR SOLAIRE

(30) Priorität: 30.07.2013 DE 102013214863
(43) Veröffentlichungstag der Anmeldung: 08.06.2016
(73) Patentinhaber: Rioglass Solar Holding, S.A., 33695 Pola de Lena, Asturias (ES)
(72) Erfinder: KUCKELKORN, Thomas, 07743 Jena (DE); BENZ, Nikolaus, 55131 Mainz (DE); KAMP, Hanno, 23568 Lübeck (DE); SCHMIDT, Meike, 95666 Mitterteich (DE)
(74) Vertreter: Mehler Achler
(86) Internationale Anmeldenummer: PCT/EP2014/064936
(87) Internationale Veröffentlichungsnummer: WO 2015/014592

(56) Entgegenhaltungen:
- EP-A1- 2 217 865
- EP-A2- 0 534 164
- FR-A1- 2 175 526
- JP-A- H09 165 655
- KR-B1- 100 276 325
- US-A- 2 602 028
- US-A- 4 999 159
- US-A1- 2013 130 058

## Beschreibung

Die vorliegende Erfindung betrifft einen rohrförmigen Körper aus Stahl, insbesondere austenitischem Stahl, für eine Salzschmelze, insbesondere ein Absorberrohr eines Solarreceivers mit einer Salzschmelze als Wärmeträger oder eine sonstige Rohrleitung zur Förderung einer Salzschmelze, sowie einen solchen Solarreceiver.

Die Stromerzeugung aus Sonneneinstrahlung ist u.a. mit konzentrierenden solarthermischen Kraftwerken möglich. Hier unterscheidet man zwischen zentralkonzentrierenden Systemen wie beispielsweise Turmkraftwerken oder linearkonzentrierenden Systemen, die beispielsweise auf der Fresneltechnik oder der Parabolrinnentechnik beruhen.

Solarreceiver, beispielsweise für Parabolrinnen-Solarreceiversysteme, beispielsweise für solarthermische Kraftwerke, umfassen unter anderem ein Stahlrohr als Absorberrohr und ein Glasrohr als Hüllrohr.

Rohrleitungen, die von einer Salzschmelze durchströmt werden, sollen zum Beispiel in Solarkraftwerken, insbesondere Parabolrinnen- oder Fresnel-Solarkraftwerken, eingesetzt werden.

In einem solchen Solarkraftwerk wird die Strahlungsenergie der Sonne mit Hilfe von Parabolspiegeln oder Fresnelspiegeln auf den Receiver konzentriert. Eine Anzahl von Receivern wird in Reihe geschaltet. Die vom Absorberrohr der Receiver aufgenommene Strahlungsenergie wird in Wärme umgewandelt, auf ein Wärmeträgerfluid im Absorberrohr übertragen und durch das Wärmeträgerfluid zu einem Dampferzeuger transportiert. Aktuell werden als Wärmeträgerflüssigkeit synthetische Öle, insbesondere ein Biphenyl-/Diphenylethergemisch eingesetzt. Die Zersetzungstemperatur dieses Gemisches von 400°C gibt jedoch die maximale Betriebstemperatur des Kraftwerkes vor.

Um höhere Betriebstemperaturen möglich zu machen, die einen höheren Wirkungsgrad des solarthermischen Kraftwerkes ermöglichen, sind andere Wärmeträgermedien erforderlich.

Vorteilhaft wäre es, eine Temperatur von ca. 535 °C an der Turbine des Kraftwerks zu erreichen, da so die Anbindung der solarthermischen Technologie an die heute in konventionellen Kraftwerken eingesetzten Komponenten und Anlagen möglich würde. Aufgrund der Verluste im Wärmetauscher wird dafür eine Temperatur des Mediums von 550 °C benötigt. Wegen der Temperaturgradienten in der Wandung des Absorberrohres des Receivers ist eine Temperatur von ca. 580 °C an der Oberfläche des Absorberrohrs erforderlich.

Hierzu gibt es zwei Lösungsansätze, zum einen die direkte Verdampfung von Wasser im Receiver, die sog. Direktverdampfungstechnologie, zum anderen die sog. Molten-Salt-Technologie. In letzterer Technologie werden Salzschmelzen, insbesondere nitratbasierte Salzschmelzen, z.B. das sogenannte Solarsalz 60, ein Gemisch aus Natriumnitrat und Kaliumnitrat im Verhältnis von 60 zu 40, eingesetzt.

Die Molten-Salt-Technologie hat gegenüber der Direktverdampfungstechnologie den Vorteil, dass Salzschmelzen zwar bisher noch nicht als Wärmeträger, aber bereits als Wärmespeichermedium eingesetzt werden, zum Beispiel in Kombination mit ölbasierten solarthermischen Kraftwerken. Die Molten-Salt-Technologie, in der Wärmeträger- und Wärmespeichermedium identisch sind, hat gegenüber der ölbasierten Technologie mit Salzspeicher den Vorteil, dass kein verlustbehafteter Wärmeübergang zwischen Träger und Speicher erfolgen muss.

Die bisher für Absorberrohre in Solarreceivern und/oder für sonstige Rohrleitungen für solarthermische Kraftwerke verwendeten Stähle sind beispielsweise die Stähle mit den Werkstoffnummern 1.4404, 1.4571 und 1.4541, aber auch 1.4301.

Der Einsatz dieser Stähle ist laut DIN EN 10217/7 auf Arbeitstemperaturen bis maximal 400 °C bzw. für den letztgenannten auf maximal 300 °C begrenzt, was für die bisherigen Wärmeträgermedien ausreichend ist, für die genannten Salze aber nicht ausreicht.

Bei höheren Temperaturen ist insbesondere die Zeitstandfestigkeit nicht gegeben, da der Stahl in den Kriechbereich eintritt, weil ein das austenitische Gefüge festigendes Moment fehlt. Bei den gewünschten Temperaturen von ca. 580 °C beginnt die Sensibilisierung des Werkstoffs für interkristalline Korrosion nach ca. 1500 h je nach erfolgter Vorbehandlung, beispielsweise Lösungsglühen oder Stabilisierungsglühen. Die übliche Betriebsstundendauer eines solarthermischen Kraftwerks liegt aber über die gesamte Laufzeit bei ca. 100 000 Stunden.

Es sind auch temperaturbeständigere Stähle bekannt. So sind die Stähle mit den Werkstoffnummern 1.4941 und 1.4910 warmfeste austenitische Stähle, die jedoch nicht beständig gegen eine Sensibilisierung gegen interkristalline Korrosion sind. Nur beim Einsatz unter 400°C ändern sich diese Stähle innerhalb 100 000 Stunden nicht so, dass bei Prüfung nach EN ISO 3651-2 Empfindlichkeit gegenüber interkristalliner Korrosion nachgewiesen wird.

Aus der US 2012/0279607 A ist ein Stahl einer breiten Grundzusammensetzung bekannt, die zwar für Hochtemperaturanwendungen Anwendung findet, die aber nachteiligerweise keine Stabilisierung gegen Sensibilisierung aufweist.

Aus der Schrift KR100276325 B1 ist ein austenitischer Stahl mit verbesserter Warmfestigkeit und intergranularer Korrosionsbeständigkeit bekannt, welcher einen verringerten Kohlenstoff- und Titangehalt und einen daran angepassten Stickstoffgehalt aufweist. Die Zusammensetzung des austenitischen Stahls mit einem Ti/C Verhältnis zwischen 5 und 8 weist die folgende Zusammensetzung auf: 10 bis 20 Gew-% Cr, 8 bis 15 Gew.-% Ni, 3 oder weniger Gew-% Mo, zwei oder weniger Gew.-% Mn, 1 oder weniger Gew.-% Si, 0,025 oder weniger Gew.-% C, 0,1 bis 0,2 Gew.-% Ti und 0,05 bis 0,095 Gew.-% N.

Ein anderer austenitischer Stahl ist aus der Schrift FR 2.175.526 A1 bekannt, welcher 18 % und 10 % Nickel enthält. Der Stahl enthält wahlweise Molybdän und ist mit Titan und/oder Niob stabilisiert. Er enthält weiterhin 0,002 bis 0,015 % Bor. Der Stahl wird anstelle einer Wärmebehandlung bei Temperaturen von wenigstens 1200°C und einer schnellen anschließenden Abkühlung unterzogen, wodurch sich Ausscheidungen von Karbiden und Carbonitriden bilden. Hierdurch wird die Elastizitätsgrenze erhöht, ohne die Umformbarkeit zu verschlechtern. Anschließend wird der Stahl einer Kaltumformung und einer anschließenden Ausscheidungshärtung bei 600 bis 800°C unterzogen.

Der Erfindung liegt daher die Aufgabe zugrunde, rohrförmige Körper aus Materialien bereitzustellen, welche zur Aufnahme und zum Transport heißer und oxidierender Flüssigkeiten geeignet sind und die bei der Verwendung geschmolzener Salze als Wärmeträgermedien geforderte hohe Temperaturbeständigkeit und auch die sonstigen für einen Betrieb der Rohre im Freien, also der Außenbewitterung ausgesetzt, nötigen Eigenschaften aufweisen.

Diese Aufgabe wird mit dem rohrförmigen Körper gemäß dem Hauptanspruch gelöst.

Es besteht aus austenitischem Stahl. Austenitische Stähle sind unmagnetische Stähle, die wegen ihrer Legierungsbestandteile Chrom, Mangan und/oder Nickel auch bei Raumtemperatur das flächenzentrierte Raumgitter des Austenits beibehalten.

Die Stahlzusammensetzung des erfindungsgemäßen rohrförmigen Körpers umfasst auf Gewichtsbasis
0,04 % bis 0,05 % C;
0,01 % bis 0,014 % N;
0,14 % bis 0,16 % Mo
0,5 % bis 0,6 % Si;
0,8 % bis 0,85 % Mn;
0,02 % bis 0,03 % P;
0,001 % bis 0,002 % S;
18,0 % bis 19,0 % Cr;
9,0 % bis 12,0 % Ni;
0,0015 % bis 0,003 % B;
0,2 % bis 0,23 % Cu;
0,001 % bis 0,007 % Al;
0,005 % bis 0,013 % Nb;
0,05 % bis 0,12 % V:
0,1 % bis 0,19 % Co;
0,32 % bis 0,4 % Ti;
und enthält als Rest Fe und ggf. übliche Verunreinigungen.

Das Ti/C-Verhältnis beträgt wenigstens 6.

Das hohe Ti/C-Verhältnis von wenigstens 6 hat den Vorteil, dass eine ausreichende Stabilisierung gegen Sensibilisierung gegeben ist.

Ein Ti-Gehalt von 0,24 % bis 0,64 % spielt seine Vorteile insbesondere dann aus, wenn lange Betriebszeiten bei > 400°C vorgesehen sind und sowohl eine Stabilisierung wie auch Zeitstandfestigkeiten gefordert sind.

Das Vorhandensein von Kohlenstoff mit der genannten Mindestmenge erhöht vorteilhaft den Kriechwiderstand. Der C-Gehalt soll aber wie durch die Obergrenze angegeben gering bleiben, um die Gefahr der durch Chromcarbide entstehenden Sensibilisierung für interkristalline Korrosion zu minimieren.

Der Gehalt an Mangan soll gering bleiben, um einer vorzeitige Alterung der Absorberschicht auf dem Receiverrohr entgegen zu wirken.

Der Gehalt an Chrom soll wie mit den genannten Grenzen beschrieben recht hoch sein, um möglichst weit von der sog. Chromverarmungsgrenze, die bei etwa 12% liegt, entfernt zu sein.

Das Vorhandensein von Molybdän erhöht vorteilhaft die Zeitstandfestigkeit und die Korrosionsbeständigkeit. Der Mo-Gehalt soll aber wie durch die Obergrenze angegeben gering bleiben, um einen kostengünstigen Stahl zu gewährleisten.

Das Vorhandensein von Kupfer erhöht vorteilhaft die Witterungsbeständigkeit. Der Cu-Gehalt soll aber wie durch die Obergrenze angegeben gering bleiben, da zu hohe Gehalte die Bruchdehnung vermindern.

Das Vorhandensein von Titan in der genannten Mindestmenge dient der Stabilisierung gegen Sensibilisierung.

Stickstoff bildet mit dem Titan Titannitride, die zu einer Verschlechterung der Zähigkeit führen, wenn die gebildeten Teilchen zu groß werden. Dies ist Fall, wenn das Verhältnis Ti/N zu klein ist. Um die positive Wirkung des Titans auszunutzen, wird vorzugsweise der Stickstoffgehalt minimiert.

Das Vorhandensein von Vanadium erhöht vorteilhaft die Zeitstandfestigkeit.

Auch das Vorhandensein von Cobalt erhöht vorteilhaft die Zeitstandfestigkeit.

Ebenso erhöht das Vorhandensein von Bor in der genannten Mindestmenge die Zeitstandfestigkeit und die Wärmefestigkeit. Der Gehalt an Bor ist aber auf die genannte Höchstgrenze beschränkt, da bei höheren Gehalten die Korrosionsbeständigkeit vermindert würde.

Das Vorhandensein von Stickstoff erhöht den Kriechwiderstand.

Der recht hohe Mangan-Gehalt erhöht die Festigkeit und die Streckgrenze.

Diese austenitische Stahlzusammensetzung, deren Bestandteile nur in sehr engen Grenzen variieren, vereint in besonders vorteilhafter Weise die mechanischen Eigenschaften eines warmfesten Stahls. Gleichzeitig erfüllt sie die Anforderungen, beständig gegen geschmolzene Nitratsalze und äußere Bewitterung zu sein, ohne die Nachteile einer Sensibilisierung aufzuweisen.

In einer Ausführungsform der Erfindung wird insbesondere die Zusammensetzung von 1.4941 und 1.4910 innerhalb der Vorgaben der DIN 10216-5 dahingehend modifiziert und weiterentwickelt, dass zusätzlich zu den für sie bekannten Eigenschaften eine besondere Stabilisierung gegenüber interkristalliner Korrosion erfolgt.

Kohlenstoff ist ein starker Austenitbildner und erhöht den Widerstand gegen die Bildung von Umformprodukten bei der Verarbeitung des Stahls und die Temperaturresistenz des Stahls. Durch die Einhaltung der genannten Obergrenze an Kohlenstoff wird die Gefahr von Chromcarbidbildung und -ausscheidung bei einer Wärmebehandlung verringert, wodurch die Gefahr der Verarmung von Chrom an den Korngrenzen des Stahls und die damit einhergehende Sensibilisierung für interkristalline Korrosion verringert wird, welche das Rohr schwächen würde.

Zur weiteren Verbesserung gegen interkristalline Korrosion kann auch ein Teil des Kohlenstoffs durch Stickstoff ersetzt werden.

Der Silicium-Gehalt im genannten Bereich verbessert die Korrosionsresistenz gegen geschmolzene Salze.

Mangan ist ein Austenitbildner. Der Mangan-Gehalt und der Bor-Anteil in den genannten Bereichen tragen zur Verfestigung bei, indem sie die Bildung von Ausscheidungen im Bereich der Korngrenzen behindern und die Zeitstandfestigkeit erhöhen. Ein geringer Mangangehalt von bis zu 1 Gew.-% verbessert Haftung und Alterungsbeständigkeit der Absorberbeschichtung auf dem Stahlrohr.

Das Vorhandensein von Phosphor und von Schwefel ist auf die genannten Gehalte beschränkt, um den negativen Einfluss dieser Legierungselemente auf die Verformbarkeit des Stahls weitestgehend ausschließen.

Chrom ist in erster Linie zur Verbesserung der Korrosionsbeständigkeit vorhanden.

Nickel dient als Austenitbildner.

Titan dient als Karbidbildner, um einer Sensibilisierung entgegen zu wirken.

Durch das für diese Ausführungsform wesentliche Verhältnis von Ti zu C, nämlich Ti/C wenigstens 6, bevorzugt 6 C ≤ Ti ≤ 8 C, wird die Sensibilisierung für interkristalline Korrosion weitestgehend verhindert, die selbst die temperaturstabilen bekannten Stähle bei hohen Temperaturen zeigen, was dann in einem nicht korrosionsfreien Umfeld auch bei niedrigen Temperaturen aufgrund von Feuchte und/oder Salzkontakt zu Korrosion führen würde, während die erfindungsgemäßen Stähle auch bei den geforderten hohen Betriebstemperaturen und Kontakt mit geschmolzenen Salzen und ständiger Außenbewitterung ausgesetzt keine Korrosion zeigen. Höhere als die genannten Titananteile würden zu Sigma-Phasen-Bildung führen, niedrigere Titananteile führten zu einer unzureichenden Stabilisierung.

Mögliche Verunreinigungen hängen von den bei der Stahlherstellung verwendeten Ausgangsstoffen ab. Übliche Verunreinigungen sind dem Fachmann bekannt und können beispielsweise Na und Mg sein. Der Fachmann weiß einen Stahl des genannten Zusammensetzungsbereichs auf übliche Art und Weise herzustellen und zu einem Stahlrohr zu verarbeiten. Üblicherweise werden nach den Verfahrens- und Bearbeitungsschritten Erschmelzen eines Stahls mit einer Zusammensetzung im genannten Zusammensetzungsbereich und daraus zunächst durch Warmwalzen, dann durch Kaltwalzen Herstellung von Coils in der gewünschten Dicke Band oder Blech kalt eingeformt und anschließend durch Schmelzschweißen zum endgültigen Rohr geschweißt. Nach diesem Bearbeitungsschritt erfolgt ein Lösungsglühen, um die bei der Kaltverformung und beim Schweißen erfolgte Gefügeveränderung, insbesondere Chromcarbidbildung, zumindest teilweise rückgängig zu machen. Um der Sensibilisierung und der daraus resultierenden interkristallinen Korrosion entgegenzuwirken, ist es vorteilhaft, wenn nach dem Lösungsglühen ein Stabilisierungsglühen bei 870 °C - 950 °C unter Inertgasatmosphäre über einen Zeitraum von mindestens 30 min durchgeführt wird.

Ggf. folgt zur Entfernung des verbleibenden Zunders ein Beizschritt. Außerdem schließen sich noch die Schritte Schleifen, um die geforderte Oberflächengüte zu erzielen, und Reinigung an.

Die Erfindung soll an folgenden Figuren beispielhaft erläutert werden.

Es zeigen
- Figur 1: ein Solarreceiverende mit Absorberrohr
- Figur 2: eine Rohrleitung

### Im Einzelnen:

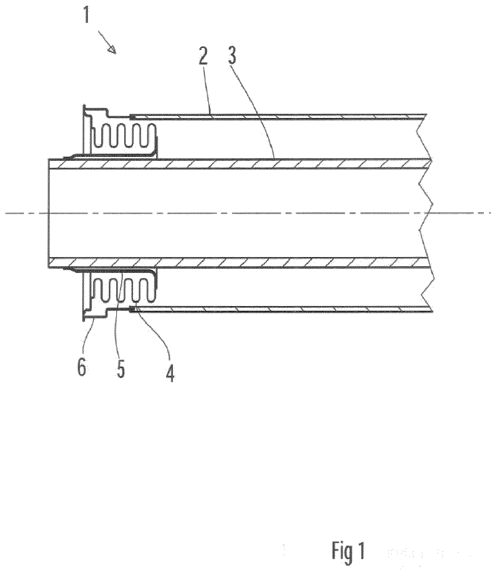

In der Fig. 1 ist schematisch ein Ende eines Solarreceivers 1 im Schnitt dargestellt. Der Solarreceiver 1 weist ein aus Glas bestehendes Hüllrohr 2 und ein im Hüllrohr 2 konzentrisch angeordnetes Absorberrohr 3 auf, das an seiner Außenseite mit strahlungsselektiver Beschichtung zur Absorption solarer Strahlung beschichtet ist. Der Receiver weist eine Dehnungsausgleichseinrichtung in Form eines Faltenbalgs 4 auf. Das innere Ende des Faltenbalgs 4 ist über ein Anschlusselement 5 mit dem Stahlrohr 2 und das äußere Ende des Faltenbalgs 4 über ein Glas-Übergangselement 6 mit dem Glasrohr 2 verbunden.

Das Absorberrohr 3 besteht aus einer Zusammensetzung aus dem beanspruchten Zusammensetzungsbereich. Anschlusselement 5 besteht aus Edelstahl, bevorzugt aus demselben Stahl wie das Absorberrohr 3. Das Glas-Metall-Übergangselement 6 besteht aus Kovar, und der Faltenbalg 4 besteht aus Edelstahl. Das Glas des Hüllrohres ist ein antireflex-beschichtetes Borosilicatglas. Anschlusselement und erfindungsgemäßes Stahlrohr sind gasdicht miteinander verschweißt.

Selbstverständlich ist die Erfindung nicht auf diese konkrete Ausgestaltung der Rohrverbindung beschränkt. Verbindungen des Stahlrohrs in anderen Formen und mit anderen Materialien sind möglich. Übliche hocheffiziente Absorberbeschichtungen, wie sie beispielsweise aus DE 10 2006 056 536 B3 oder DE 10 2008 010 199 A1 bekannt sind, haften ausreichend gut auf dem austenitischen Stahlrohr. Auch Innenbeschichtungen, beispielsweise aus Chromoxid, sind möglich.

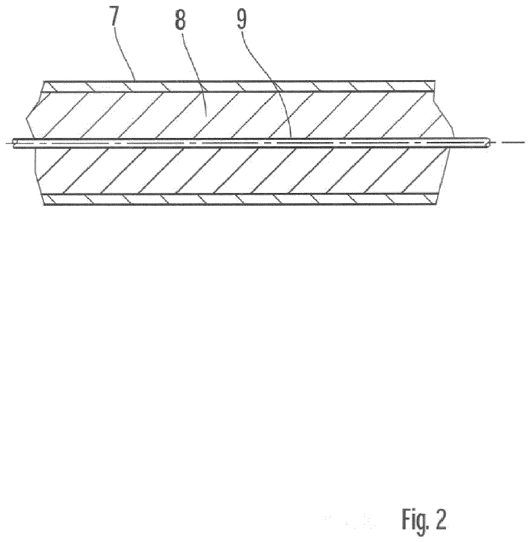

Figur 2 zeigt den Längsschnitt einen Rohrleitungsabschnittes. Dargestellt ist neben dem Rohr 7 und dem geschmolzenen Salz 8 ein Innenheizleiter 9. Es sind auch entsprechende Rohrleitungen mit Außenheizleitern statt eines Innenheizleiters möglich.

Ein Referenzstahlrohr (mit erniedrigtem Cr-gehalt) mit der Zusammensetzung auf Gewichtsbasis
0,043 % C;
0,013 % N;
0,55 % Si;
0,82 % Mn;
0,022 % P;
0,001 % S;
17,01 % Cr;
9,00 % Ni;
0,0029 % B;
0,340 % Ti;
0,21 % Cu;
0,16 % Mo
(wobei der Rest Fe und ggf. übliche Verunreinigungen sind) hat die folgenden Eigenschaften (jeweils Mittelwert aus sechs Messungen):
Dehngrenze bei RT: R_{p0,2} = 352 MPa; R_{p1,0} = 385 MPa
Zugfestigkeit Rₘ = 686 MPa
Bruchdehnung bei RT: längs 47,5 %

Durch das Verhältnis Ti/C = 7,9 ist eine ausreichende Stabilisierung des Stahles gegenüber Sensibilisierung gegen interkristalline Korrosion gegeben. Auch nach langer thermischer Auslagerung über 400°C ist der Strauss-Test gemäß DIN EN ISO 3651-2 negativ. Unter gleichen Bedingungen zeigt ein ansonsten gleicher Stahl, insbesondere mit identischem C-Gehalt, der weniger als 0,258 % Ti (und dafür mehr Fe) enthält, bei Prüfung nach EN ISO 3651-2 Empfindlichkeit gegenüber interkristalliner Korrosion.

Die erfindungsgemäßen rohrförmigen Körper sind für die Verwendung als Absorberrohre eines Solarreceivers mit einer Salzschmelze als Wärmeträger oder als sonstige Rohrleitungen zur Förderung einer Salzschmelze, also als druckführende Rohrleitungen, hervorragend geeignet, da sie folgenden Beanspruchungen schadenfrei standhalten:
Dauereinsatz bei Temperaturen bis 580 °C,
zyklische Temperaturbeanspruchung,
Druckbeanspruchung,
chemische Beanspruchung durch geschmolzene Salze,
Außenbewitterung, was Feuchtigkeit, Nässe, Hitze, Kälte, salzhaltige Luft bedeutet,
mechanische Beanspruchung.

Dies tun sie, da sie folgende Werte für die charakteristischen Größen der mechanischen Eigenschaften aufweisen:
Mindestwerte der Dehngrenze bei RT: R_{p0,2} = 195 MPa R_{p1,0} = 235 MPa
Mindestwerte der Dehngrenze bei 400°C: R_{p0,2} = 123 MPa R_{p1,0} = 162 MPa
Mindestwerte der Dehngrenze bei 550°C : R_{p0,2} = 108 MPa R_{p1,0} = 147 MPa
Mindestwert der Zugfestigkeit Rₘ = 490 MPa
Mindestwerte der Bruchdehnung bei RT: längs 35%, quer 30%
Mindestwerte der Kerbschlagarbeit bei RT: längs 100 J, quer 60 J.

Die Stähle zeigen, wenn sie mit Nitratsalzschmelze durchströmt werden, weniger als 30µm Materialabtrag pro simulierten 4000 Betriebsstunden bei 550 °C.

## Patentansprüche

1. Rohrförmiger Körper aus austenitischem Stahl für eine Salzschmelze, insbesondere Absorberrohr eines Solarreceivers mit einer Salzschmelze als Wärmeträger oder sonstige Rohrleitung zur Förderung einer Salzschmelze, mit einer Stahlzusammensetzung, die auf Gewichtsbasis besteht aus:
0,04 % - 0,05 % C;
0,01 % - 0,014 % N;
0,14 % - 0,16 % Mo;
0,5 % - 0,6 % Si;
0,8 % - 0,85 % Mn;
0,02 % - 0,03 % P;
0,001 % - 0,002 % S;
18,0 % - 19,0 % Cr;
9,0 % - 12,0 % Ni;
0,0015 % - 0,003 % B;
0,2 % - 0,23 % Cu;
0,001 % - 0,007 % Al;
0,005 % - 0,013 % Nb;
0,05 % - 0,12 % V;
0,1 % - 0,19 % Co;
0,32 % - 0,4 % Ti;
wobei der Rest Fe und ggf. übliche Verunreinigungen sind.

2. Solarreceiver mit einer Salzschmelze als Wärmeträger mit einem Absorberrohr aus einem rohrförmigen Körper nach Anspruch 1.

## Claims

1. Tubular member of austenitic steel for a molten salt, in particular an absorber pipe of a solar receiver having a molten salt as a heat carrier or another pipeline for conveying a molten salt, having a salt composition which comprises on a basis by weight:
from 0.04% to 0.05% C;
from 0.01% to 0.014% N;
from 0.14% to 0.16% Mo;
from 0.5% to 0.6% Si;
from 0.8% to 0.85% Mn;
from 0.02% to 0.03% P;
from 0.001% to 0.002% S;
from 18.0% to 19.0% Cr;
from 9.0% to 12.0% Ni;
from 0.0015% to 0.003% B;
from 0.2% to 0.23% Cu;
from 0.001% to 0.007% Al;
from 0.005% to 0.013% Nb;
from 0.05% to 0.12% V;
from 0.1% to 0.19% Co;
from 0.32% to 0.4% Ti;
the balance being Fe and where applicable conventional impurities.

2. Solar receiver having a molten salt as a heat carrier having an absorber pipe produced from a tubular member according to claim 1.

## Revendications

1. Corps tubulaire en acier austénitique pour un sel fondu, en particulier tube d'absorbeur d'un récepteur solaire avec un sel fondu en tant que caloporteur ou autre conduite tubulaire destinée au transport d'un sel fondu, avec une composition d'acier qui, sur une base pondérale, est constituée de :
0,04 % à 0,05 % de C ;
0,01 % à 0,014 % de N ;
0,14 % à 0,16 % de Mo ;
0,5 % à 0,6 % de Si ;
0,8 % à 0,85 % de Mn ;
0,02 % à 0,03 % de P ;
0,001 % à 0,002 % de S ;
18,0 % à 19,0 % de Cr ;
9,0 % à 12 % de Ni ;
0,0015 % à 0,003 % de B ;
0,2 % à 0,23 % de Cu ;
0,001 % à 0,007 % d'Al ;
0,005 % à 0,013 % de Nb ;
0,05 % à 0,12 % de V ;
0,1 % à 0,19 % de Co ;
0,32 % à 0,4 % de Ti ;
le reste étant du Fe et éventuellement des impuretés habituelles.

2. Récepteur solaire avec un sel fondu en tant que caloporteur avec un tube absorbeur en un corps tubulaire selon la revendication 1.
